# EUROPÄISCHE PATENTSCHRIFT

(11) **EP 1 557 548 B1**
(45) Veröffentlichungstag und Bekanntmachung des Hinweises auf die Patenterteilung: **20.05.2009**
(21) Anmeldenummer: 04027620.6
(22) Anmeldetag: 20.11.2004
(51) Int. Cl.: F02D 41/00, F02D 19/02, F02D 23/00

(54) **Verfahren zum Betrieb einer gemischaufgeladenen Brennkraftmaschine**
Method for operating an engine with supercharged mixture
Méthode de fonctionnement d'un moteur à mélange comprimé

(30) Priorität: 23.01.2004 AT 832004
(43) Veröffentlichungstag der Anmeldung: 27.07.2005
(73) Patentinhaber: GE Jenbacher GmbH & Co. OHG, 6200 Jenbach (AT)
(72) Erfinder: Schulze, Matthias, 6020 Innsbruck (AT); Robitschko, Reinhard, 6200 Jenbach (AT); Fahringer, Albert, 6345 Kössen (AT); Schödl, Friedrich, 6067 Absam (AT); Herr Klausner, Johann, 6391 St. Jakob im Haus (AT)
(74) Vertreter: Torggler, Paul Norbert

(56) Entgegenhaltungen:
- DE-A1- 19 609 923
- DE-A1- 19 624 824
- US-A- 5 404 843
- US-A- 5 842 459
- PATENT ABSTRACTS OF JAPAN Bd. 013, Nr. 183 (M-820), 28. April 1989 (1989-04-28) & JP 01 012059 A (TOYOTA AUTOM LOOM WORKS LTD), 17. Januar 1989 (1989-01-17)

## Beschreibung

Die vorliegende Erfindung betrifft ein Verfahren zum Betrieb einer gemischaufgeladenen Brennkraftmaschine mit mindestens einem Ansaugtrakt über den Brennstoff-Luft-Gemisch mindestens einem Zylinder zugeführt wird und einem Abgastrakt. Darüber hinaus betrifft die Erfindung eine Brennkraftmaschine mit einer Regeleinrichtung zur Durchführung des Verfahrens.

Bei gemischaufgeladenen Brennkraftmaschinen kommt es vor allem bei Verbrennung von Prozessabgasen zu durch Glühzündungen hervorgerufenen ansaugseitigen Verpuffungen. Besonders kritisch sind hierbei Prozessabgase, da sie im Vergleich zu reinem Erdgas oft einen hohen Anteil an Verunreinigungen enthalten, die sich im Brennraum des Motors ablagern. Je dicker die Ablagerungen werden, umso schlechter funktioniert die Wärmeableitung an die Zylinderwand, was zu einer starken Erwärmung führt. Wenn die Oberflächentemperatur der Ablagerungen über die Entzündungstemperatur des einströmenden Brennstoff-Luft-Gemisches steigt, wird das Gemisch bereits vor dem eigentlichen Zündzeitpunkt entzündet.

Wenn es durch die heißen Ablagerungen zu einem anhaltenden Frühzünden des einströmenden Gemisches an den heißen Zylinderwänden kommt, entsteht ein für den Motor kritischer Zustand. Es bricht die Leistung um einen einem Zylinder entsprechenden Anteil ein. Durch eine Gemischentzündung bei noch geöffneten Einlassventilen kommt es zur Verpuffung im Ansaugtrakt. Zwischen dem Beginn des dauerhaften Glühzündens und einer Rückzündung in den Ansaugtakt vergehen nur wenige Sekunden. Das geschilderte Phänomen wird zum Beispiel bei Brennstoffen mit wasserstoffhaltigen Gasen, wie Pyrolyseoder Koksgas beobachtet, da sich der Wasserstoff im Gemisch bei Auftreten irgendwelcher Zündquellen im System sehr zündfreudig verhält.

Aufgabe der vorliegenden Erfindung ist es, ein Verfahren wie auch eine Regeleinrichtung für eine Brennkraftmaschine zu schaffen, um damit die geschilderten, durch Glühzündung hervorgerufenen Verpuffungen im Ansaugtrakt zu vermeiden.

Dies wird erfindungsgemäß erreicht, indem - zur Verhinderung von durch Glühzündungen hervorgerufenen Verpuffungen im Ansaugtrakt - die Ist-Leistung der Brennkraftmaschine und die Temperatur im Zylinder oder im nachgeschalteten Abgastrakt gemessen werden und im Falle eines Leistungseinbruches der Ist-Leistung die Soll-Leistung der Brennkraftmaschine reduziert wird und anschließend bei weiter steigender Temperatur im Zylinder oder im nachgeschalteten Abgastrakt die Brennstoffzufuhr oder Brennstoff-Luft-Gemisch-Zufuhr kurzzeitig unterbrochen wird.

Beim erfindungsgemäßen Verfahren reagiert die Regeleinrichtung der Brennkraftmaschine bereits auf die Symptome der anhaltenden Glühzündung und kann durch entsprechende Eingriffe in den Energiefluss eine Verpuffung verhindern. In der erfindungsgemäßen Grundvariante setzt sich das Verfahren im Wesentlichen aus zwei Einzelfunktionen zusammen, einer schnellen Leistungsreduktion auf einen definierten Wert und einem kurzzeitigen Unterbrechen der Gaszufuhr durch Sicherheitsschließen von Ventilen in der Brennstoff- oder Brennstoff-Luft-Gemisch-Zuleitung. Ein besonderer Vorteil dieses Verfahrens ist es, dass der Motor in der Regel nicht abgeschaltet werden muss, um die Glühzündungen zu stoppen.

Eine Brennkraftmaschine mit einer Regelung zur Durchführung des erfindungsgemäßen Verfahrens weist mindestens eine Temperatursonde zur Messung der Temperatur im Zylinder oder im nachgeschalteten Abgastrakt und mindestens eine Einrichtung zur Erfassung der Ist-Leistung auf. Bei der Brennkraftmaschine handelt es sich vorzugsweise um einen gemischaufgeladenen, vorzugsweise stationären, Otto-Gas-Motor.

Weitere Einzelheiten und Merkmale der vorliegenden Erfindung ergeben sich aus der nachfolgenden Figurenbeschreibung. Dabei zeigt:
- Fig. 1: das Phänomen der durch Glühzündung verursachten Verpuffung im Ansaugtrakt anhand dreier gemessener Parameter,
- Fig. 2: eine schematische Darstellung einer erfindungsgemäßen Brennkraftmaschine,
- Fig. 3 und 4: die Wirkungen verschiedener Varianten des erfindungemäßen Verfahrens anhand ausgewählter Motorparameter und
- Fig. 5: ein erfindungsgemäßes Regelschema.

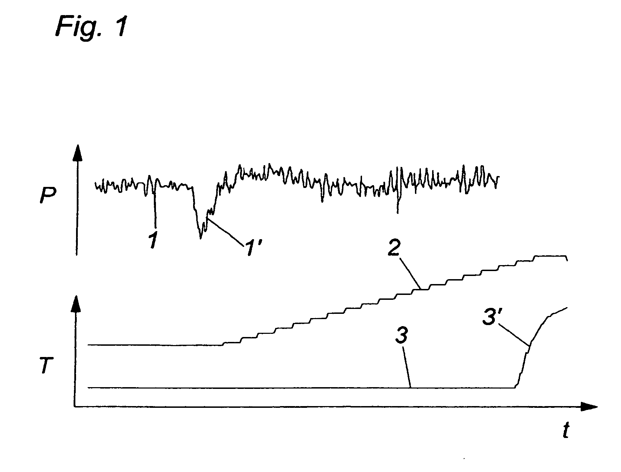

Fig. 1 zeigt zunächst das Problem, wie es beim Stand der Technik auftritt, anhand der Parameter Motor-Ist-Leistung 1 sowie der Temperaturverläufe 2 und 3 aufgetragen gegen die Zeit t. Die Kurve 2 zeigt dabei den von den Temperatursonden 17 im Abgastrakt des betroffenen Zylinders gemessenen Temperaturverlauf. Der Temperaturverlauf des Brennstoff-Luft-Gemisches im Ansaugtrakt ist mit dem Bezugszeichen 3 referenziert. Tritt eine anhaltende Glühzündung in einem Zylinder 4 auf, so erfährt der Motor einen Leistungseinbruch, wie er am Verlauf der Kurve 1 im Bereich 1' zu erkennen ist. Die beim Stand der Technik bekannten Leistungsregler 7 reagieren durch Öffnen der Drosselklappe 15 und/oder durch Erhöhung des Ladedrucks am Ladedruckregler 13. Hierdurch erreicht der Motor nach kurzer Zeit wieder seine Soll-Leistung, wie dies am Kurvenverlauf 1 in Fig. 1 auch zu erkennen ist. Beim Stand der Technik steigt im Anschluss daran ohne eine weitere Beeinflussung der Motorleistung jedoch die Zylindertemperatur 2 weiter an. Bei einem gewissen Temperaturwert kommt es dann zu einer Verpuffung im Ansaugtrakt des Motors. Diese Verpuffung ist am im Ansaugtrakt gemessenen Temperaturverlauf 3 des Brennstoff-Luft-Gemisches gut erkennbar an dem sprunghaften Anstieg 3' der Gemischtemperatur 3. Die in Fig. 1 gezeigten Verläufe 1, 2 und 3 zeigen reale Messdaten. In den meisten Fällen tritt die Verpuffung umso früher ein, je höher die Leistung ist.

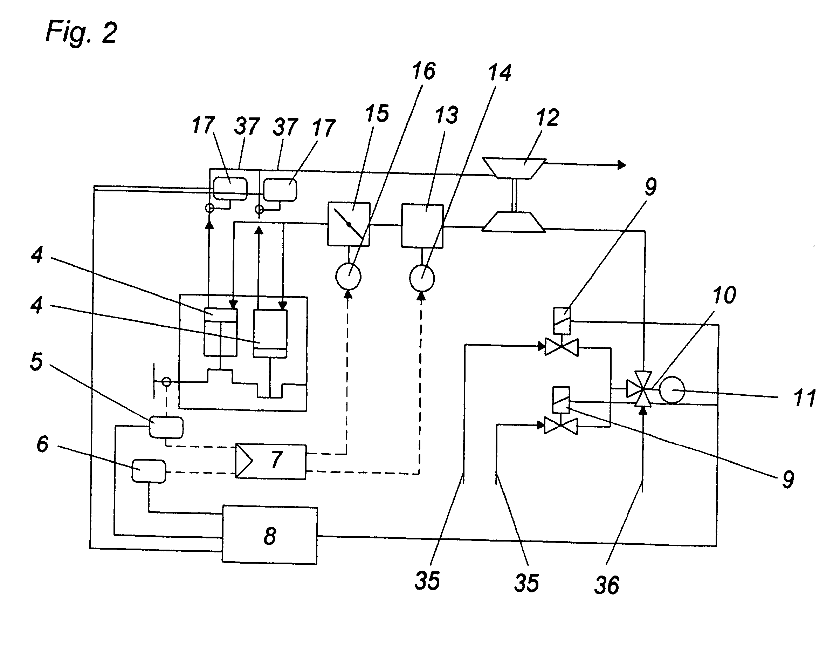

Mit dem erfindungsgemäßen Verfahren wird nun an zwei Stellen, nämlich bei der Leistungsregelung und bei der Brennstoffzufuhr bzw. bei der Brennstoff-Luft-Gemisch-Zufuhr eingegriffen. Dieser Eingriff wird zunächst anhand des in Fig. 2 dargestellten Motorschemas einer erfindungsgemäßen Ausführungsvariante einer Brennkraftmaschine beschrieben. Die Brennkraftmaschine gemäß Fig. 2 weist mehrere Zylinder 4 sowie einen Turbolader 12, eine Drosselklappe 15 mit Stellglied 16, einen Ladedruckregler 13 mit Stellglied 14 und einen Gasmischer 10 mit Stellglied 11 auf. Im gezeigten Ausführungsbeispiel handelt es sich um einen gemischaufgeladenen stationären Otto-Gas-Motor. Die Brennstoffzufuhr erfolgt über eine doppelte Gaszuleitung 35, in welche jeweils ein Gasventil 9 eingebaut ist. Von dort wird das Brenngas dem Gasmischer 10 mit seinem Stellglied 11 zugeführt und mit der durch die Leitung 36 angesaugten Luft im gewünschten Mischungsverhältnis gemischt. Darüber hinaus ist ein Leistungsregler 7 vorgesehen, der die von der Einrichtung 5 erfasste Ist-Leistung 1 mit der Soll-Leistung 6 vergleicht und entsprechend die Stellglieder 16 und/oder 14 der Drosselklappe 15 und/oder des Ladedruckreglers 13 ansteuert. Im gezeigten Ausführungsbeispiel wird die Ist-Leistung 1 der gesamten Brennkraftmaschine integral gemessen. Alternativ ist aber auch eine zylinderselektive Ist-Leistungsmessung, zum Beispiel durch Messung der Torsionsschwingung, Kurbelwelle oder durch eine Druckmessung im Zylinder 4 möglich.

Wird von der Einrichtung 5 ein in Fig. 1 dargestellter, durch Glühzündung hervorgerufener Leistungseinbruch 1' detektiert, so verringert die erfindungsgemäße Regeleinrichtung 8 sofort die Soll-Leistung 6, zum Beispiel durch schnelle Verstellung der Drosselklappe 15 oder des Ladedrucks am Ladedruckregler 13. Hierdurch wird der in der Kurve 3 gezeigte Zeitpunkt der Verpuffung 3' verzögert und Zeit gewonnen. Die im gezeigten Ausführungsbeispiel im Abgastrakt 37 jedes Zylinders angeordneten Temperatursonden 17 messen den Temperaturverlauf 2 im Abgas. Auch diese Messung kann zylinderselektiv (wie dargestellt) oder integral für die Brennkraftmaschine erfolgen. Alternativ ist auch eine Messung der Zylindertemperatur direkt an dessen Wandung oder dergleichen denkbar. Erkennt die Regeleinrichtung eine von zumindest einer Sonde 17 gemessene weiter steigende Temperatur gemäß Kurve 2 in Fig. 1, so werden die Gasventile 9 kurzzeitig geschlossen, wenn die Zylinder- bzw. Abgastemperatur 2 über einen kritischen Wert gestiegen ist. Vorzugsweise wird dieser kritische Wert durch Relationen zum Mittelwert aller Zylindertemperaturen bei zylinderselektiver Messung gebildet. Durch das kurzzeitige Ausschalten der Gaszufuhr wird die Glühzündung in dem betreffenden Zylinder gelöscht. Da es sich in der Regel um nur leicht anhaftende Ablagerungen handelt, welche zur Glühzündung führen, reicht die erfindungsgemäße Vorgehensweise, Leistungsreduktion mit kombinierter kurzzeitiger Schließung der Brennstoffzufuhr in der Regel aus, um das Phänomen der Glühzündung unter Kontrolle zu behalten. Nach Beendigung der Unterbrechung der Brennstoffzufuhr wird die Soll-Leistung von der Regeleinrichtung 8 zunächst auf einem vorab definierten niedrigen Niveau gehalten und erst beim Unterschreiten eines gewissen Temperaturwertes der Abgas- oder Zylindertemperatur 2 wird die Soll-Leistung 6 wieder erhöht.

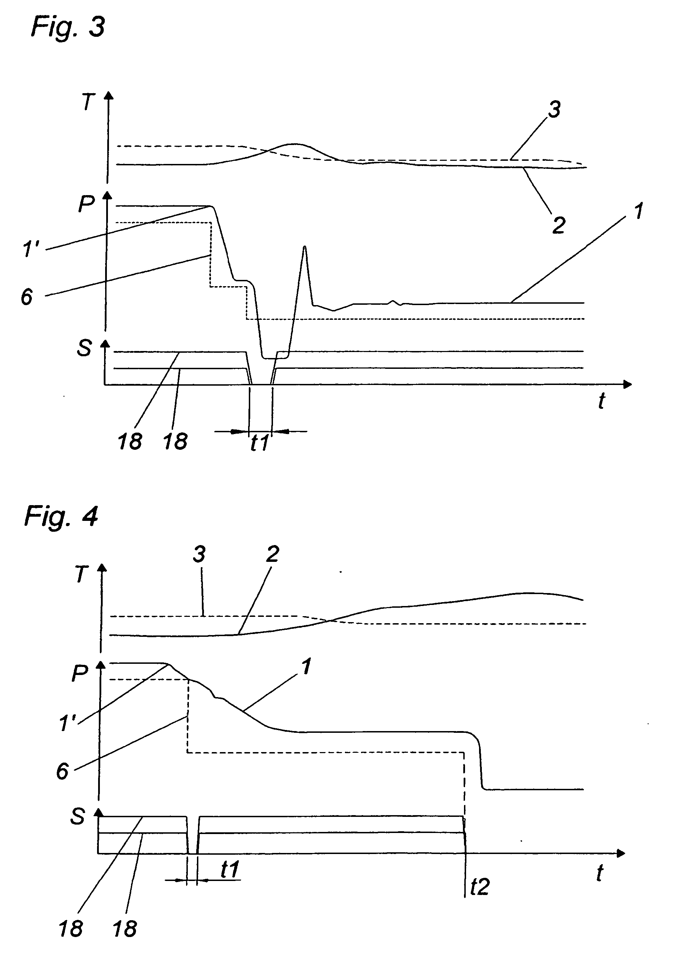

Fig. 3 zeigt ein Messbeispiel für die Anwendung des erfindungsgemäßen Verfahrens. Gestrichelt dargestellt ist der Verlauf 3 der Gemischtemperatur im Ansaugtrakt. Die durchgezogen dargestellte Linie 2 zeigt wiederum die Abgastemperatur gemessen durch die Sonden 17. Unterhalb der Temperaturverläufe sind die Ist-Leistung 1 (durchgezogene Linie) und die Soll-Leistung 6 (gepunktet dargestellt) gegen die Zeit t aufgetragen. Im Anschluss an einen Einbruch 1' der Ist-Leistung 1 wird die Soll-Leistung 6 von der Regeleinrichtung 8 zunächst sofort reduziert. Die Ist-Leistung 1 folgt mit etwas Zeitverzögerung diesem Lauf. Durch die Leistungsreduktion wird Zeit gewonnen, auf den Anstieg der Temperatur 2 im Abgastrakt durch Schließen der Gasventile 9 im Zeitintervall t1 zu reagieren. Wie am weiteren Verlauf der Kurve 2 zu erkennen ist, sinkt durch diese Maßnahme die Zylinder- bzw. Abgastemperatur 2 wieder auf normale Betriebswerte ab. Eine Verpuffung im Ansaugtrakt ist verhindert, wie dies am Temperaturverlauf 3 (Temperatur im Ansaugtrakt) zu erkennen ist. Das Schließen und wieder Öffnen der Gasventile 9 ist am Verlauf der Kurven 18 zu erkennen.

Fig. 4 zeigt eine durch eine dritte Maßnahme ergänzte Variante der Erfindung. Diese funktioniert zunächst analog wie der anhand von Fig. 3 illustrierte Verfahrensablauf. Auch hier wird auf den Leistungseinbruch 1' der Ist-Leistung 1 durch unmittelbare Reduktion der Soll-Leistung 6 und Schließen der Gasventile 9 im Zeitbereich t1 reagiert. Im dargestellten Beispiel in Fig. 4 reichen diese Maßnahmen jedoch ausnahmsweise nicht dazu aus, die Temperatur T im Abgas- bzw. im Zylinder 2 wieder auf das normale Niveau zu reduzieren. Anstelle dessen steigt die gemessene Temperatur 2 weiter an. Um nun eine Verpuffung im Ansaugtrakt zu verhindern, ist gemäß dieser Variante der Erfindung vorgesehen, bei Erreichen eines vorab definierten Maximalwertes der Zylinder- bzw. Abgastemperatur 2 die Gasventile 9 vollständig zu schließen um den Motor dadurch abzustellen. Bei dieser Art der Sicherheitsabstellung wird im Gegensatz zur normalen Abstellung des Motors der Ansaugtrakt sofort mit Luft gefüllt, sodass er kein explosionsfähiges Gemisch mehr enthält. Wie der Verlauf 3 der Temperatur im Ansaugtrakt zeigt, kommt es zu keiner Verpuffung des Brennstoff-Luft-Gemisches im Ansaugtrakt.

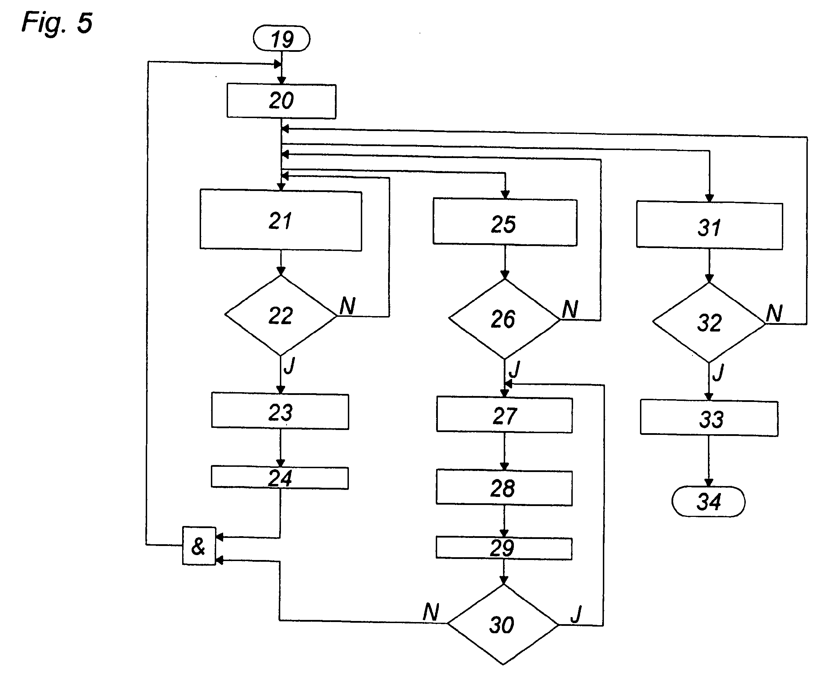

Fig. 5 zeigt ein erfindungsgemäßes Regelschema. Im Anschluss an den Start 19 wird im Punkt 20 die Soll-Leistung 6 der Brennkraftmaschine angefahren. In Punkt 21 findet ein Vergleich des Anfangs- und Endsignals der Ist-Leistung 1 innerhalb eines bestimmten Zeitfensters statt. Übersteigt die dabei festgestellte Leistungsdifferenz einen vorab definierten Wert, so wird ein Leistungseinbruch 1' detektiert. Die Regelung reagiert durch die Entscheidung 22 mit einer schnellen Leistungsreduktion 23, was zu einer dadurch hervorgerufenen Zeitverzögerung 24 führt. Bleibt die detektierte Leistungsdifferenz unterhalb der kritischen Marke, so kehrt die Regelschleife wieder an den Anfang des Punktes 21 zurück.

In einem zweiten Regelstrang wird die im Abgastrakt 37 gemessene Temperatur 2 im Schritt 25 mit einem Richtwert verglichen. Dieser Richtwert kann zum Beispiel der Mittelwert der an den Zylindern 4 zylinderselektiv gemessenen Abgastemperaturen sein. Im Schritt 26 wird entschieden, ob die beim Vergleich 25 festgestellte Temperaturdifferenz einen kritischen Wert überschreitet oder nicht. Überschreitet sie ihn, so kommt es im Punkt 27 zum kurzzeitigen Unterbrechen der Brennstoffzufuhr bzw. zum Schließen der Gasventile 9. Der Schritt 28 reduziert die Sollleistung nach dem Wiederöffnen der Gasventile. Günstigerweise wird bei dieser Leistungsreduktion ein fixer Leistungswert angefahren um instabile Zustände im Motor bzw. ein Schwingen der Motorleistung zu verhindern. Schritt 29 veranlasst eine Zeitverzögerung bis zum nächsten Schritt. Im Anschluss daran wird im Punkt 30 überprüft, ob durch das kurzzeitige Unterbrechen der Brennstoffzufuhr die Glühzündung gelöscht wurde und die Temperatur 2 nicht mehr im kritischen Maß vom Richtwert abweicht. Wird eine überkritische Temperaturdifferenz festgestellt, so kehrt das Regelschema zum Punkt 27 zurück. Es wird durch ein weiteres kurzzeitiges Unterbrechen der Brennstoffzufuhr nochmals versucht, die Glühzündung zu löschen. Wird im Punkt 30 keine kritische Temperaturdifferenz festgestellt, so folgt das Regelschema dem Weg N.

In der anhand von Fig. 4 illustrierten optionalen Variante ist noch ein dritter Regelstrang vorgesehen. Dieser beginnt im Punkt 31 wieder mit dem Vergleich der mit den Sonden 17 gemessenen Abgas- bzw. Zylindertemperatur 2 mit einem Richtwert. Dieser kann zum Beispiel wieder der Mittelwert aller zylinderselektiv bestimmten Zylindertemperaturen oder Abgastemperaturen sein. Wird im Punkt 32 festgestellt, dass die Abweichung der Temperatur 2 eines Zylinders vom Richtwert einen vorab definierten Maximalwert der Abweichung überschreitet, kommt es im Punkt 33 zum Sicherheitsabstellen der gesamten Brennkraftmaschine und damit zum Motorstop (Punkt 34). Überschreitet die Differenz zwischen den selektiv bestimmten Zylindertemperaturen und dem Richtwert nicht den vorab vorgegebenen Maximalwert der Abweichung, folgt das Regelschema, ausgehend von Punkt 32, dem Weg N.

Die Erfindung ist nicht auf die gezeigten Ausführungsbeispiele beschränkt. So kann zum Beispiel vorgesehen sein, dass die Brennstoffzufuhr nicht gleichzeitig für alle Zylinder sondern zylinderselektiv unterbrochen wird. Dies kann zum Beispiel durch Schließen der Einlassventile einzelner Zylinder erfolgen.

## Patentansprüche

1. Verfahren zum Betrieb einer gemischaufgeladenen Brennkraftmaschine mit mindestens einem Ansaugtrakt über den Brennstoff-Luft-Gemisch mindestens einem Zylinder zugeführt wird und einem Abgastrakt, **dadurch gekennzeichnet, dass** - zur Verhinderung von durch Glühzündungen hervorgerufenen Verpuffungen im Ansaugtrakt (37) - die Ist-Leistung (1) der Brennkraftmaschine und die Temperatur (2) im Zylinder oder im nachgeschalteten Abgastrakt (38) gemessen werden und im Falle eines Leistungseinbruches (1') der Ist-Leistung (1) die Soll-Leistung (6) der Brennkraftmaschine reduziert wird und anschließend bei weiter steigender Temperatur (2) im Zylinder oder im nachgeschalteten Abgastrakt (38) die Brennstoffzufuhr oder Brennstoff-Luft-Gemisch-Zufuhr kurzzeitig unterbrochen wird.

2. Verfahren nach Anspruch 1, **dadurch gekennzeichnet, dass** nach Beendigung der Unterbrechung der Brennstoffzufuhr die Soll-Leistung (6) auf einem vorab definierten niedrigen Niveau gehalten und erst bei Erreichen eines gewissen Temperaturwertes (2) im Zylinder oder im Abgastrakt wieder erhöht wird.

3. Verfahren nach Anspruch 1 oder 2 **dadurch gekennzeichnet, dass** im Anschluss an das Beenden der Unterbrechung der Brennstoffzufuhr und bei weiter steigender Temperatur im Zylinder oder im nachgeschalteten Abgastrakt über einen vorgebbaren Wert die Brennkraftmaschine oder zumindest ein Zylinder (4) abgeschaltet wird, wobei vorzugsweise die Brennstoffzufuhr oder Brennstoff-Luft-Gemisch-Zufuhr vollständig unterbrochen wird.

4. Verfahren nach einem der Ansprüche 1 bis 3, **dadurch gekennzeichnet, dass** die Brennstoffzufuhr durch Schließen mindestens eines Ventils (9) in mindestens einer Brennstoffzufuhrleitung (35) oder zylinderselektiv, vorzugsweise durch Schließen mindestens eines Einlassventils, mindestens eines Zylinders (4), unterbrochen wird.

5. Verfahren nach einem der Ansprüche 1 bis 4, **dadurch gekennzeichnet, dass** anstelle der Ist-Leistung (1) der gesamten Brennkraftmaschine eine zylinderselektive Ist-Leistung (1) gemessen wird.

6. Brennkraftmaschine mit einer Regeleinrichtung zur Durchführung des Verfahrens nach einem der Ansprüche 1 bis 5 und mindestens einer Temperatursonde (17) zur Messung der Temperatur (2) im Zylinder oder im nachgeschalteten Abgastrakt (37) und mindestens einer Einrichtung (5) zur Erfassung der Ist-Leistung (1).

7. Brennkraftmaschine nach Anspruch 6, **dadurch gekennzeichnet, dass** sie ein gemischaufgeladener, vorzugsweise stationärer, Otto-Gas-Motor ist.

## Claims

1. A method of operating a mixture-supercharged internal combustion engine comprising at least one induction manifold by way of which fuel-air mixture is fed to at least one cylinder and an exhaust manifold, **characterised in that** - to prevent detonations in the induction manifold (37) caused by incandescence ignitions - the actual power (1) of the internal combustion engine and the temperature (2) in the cylinder or the downstream-connected exhaust manifold (38) are measured and in the case of a drop (1') in the actual power (1) the reference power (6) of the internal combustion engine is reduced and then in the case of a further rise in temperature (2) in the cylinder or in the downstream-connected exhaust manifold (38) the feed of fuel or the feed of the fuel-air mixture is temporarily interrupted.

2. A method according to claim 1 **characterised in that** after the termination of the interruption in the feed of fuel the reference power (6) is maintained at a predefined low level and is increased again only upon the attainment of a certain temperature value (2) in the cylinder or in the exhaust manifold.

3. A method according to claim 1 or claim 2 **characterised in that** following the termination of the interruption in the feed of fuel and in the case of a further rise in temperature in the cylinder or in the downstream-connected exhaust manifold above a predeterminable value the internal combustion engine or at least one cylinder (4) is shut down, wherein preferably the feed of fuel or the feed of fuel-air mixture is completely interrupted.

4. A method according to one of claims 1 to 3 **characterised in that** the feed of fuel is interrupted by closing at least one valve (9) in at least one fuel feed conduit (35) or in cylinder-selective mode, preferably by closing at least one inlet valve, of at least one cylinder (4).

5. A method according to one of claims 1 to 4 **characterised in that** instead of the actual power (1) of the overall internal combustion engine a cylinder-selective actual power (1) is measured.

6. An internal combustion engine having a regulating device for carrying out the method according to one of claims 1 to 5 and at least one temperature probe (17) for measuring the temperature (2) in the cylinder or in the downstream-connected exhaust manifold (37) and at least one device (5) for detecting the actual power (1).

7. An internal combustion engine according to claim 6 **characterised in that** it is a mixture-supercharged, preferably stationary, Otto-cycle gas engine.

## Revendications

1. Procédé de fonctionnement d'un moteur à combustion interne à mélange comprimé avec au moins un secteur d'admission à travers lequel un mélange carburant/air est amené à au moins un cylindre, et un secteur de gaz d'échappement, **caractérisé en ce que** - pour empêcher des déflagrations provoquées par des allumages par incandescence dans le secteur d'admission (37) - la puissance réelle (1) du moteur à combustion interne et la température (2) dans le cylindre ou dans le secteur de gaz d'échappement (38) placé en aval sont mesurées, et en cas de chute de puissance (1') de la puissance réelle (1), la puissance théorique (6) du moteur à combustion interne est réduite, et ensuite lorsque la température (2) continue de monter dans le cylindre ou dans le secteur de gaz d'échappement (38) placé en aval, l'amenée de carburant ou l'amenée du mélange carburant/air est interrompue brièvement.

2. Procédé selon la revendication 1, **caractérisé en ce qu'**à l'issue de l'interruption de l'amenée de carburant, la puissance théorique (6) est maintenue à un niveau bas défini au préalable et est seulement remontée lorsqu'une certaine valeur de température (2) est atteinte dans le cylindre ou dans le secteur de gaz d'échappement.

3. Procédé selon la revendication 1 ou 2, **caractérisé en ce que** consécutivement à l'issue de l'interruption de l'amenée de carburant et lorsque la température continue de monter dans le cylindre ou dans le secteur de gaz d'échappement placé en aval au-dessus d'une valeur prédéfinissable, le moteur à combustion interne ou du moins un cylindre (4) est coupé, dans lequel de préférence l'amenée de carburant ou l'amenée du mélange carburant/air est interrompue complètement.

4. Procédé selon l'une quelconque des revendications 1 à 3, **caractérisé en ce que** l'amenée de carburant est coupée par la fermeture d'au moins une soupape (9) dans au moins une conduite d'amenée de carburant (35) ou sélectivement par cylindre, de préférence par la fermeture d'au moins une soupape d'entrée, d'au moins un cylindre (4).

5. Procédé selon l'une quelconque des revendications 1 à 4, **caractérisé en ce qu'**au lieu de la puissance réelle (1) du moteur à combustion interne entier, une puissance réelle (1) sélective par cylindre est mesurée.

6. Moteur à combustion interne comprenant un dispositif de régulation pour exécuter le procédé selon l'une quelconque des revendications 1 à 5 et au moins une sonde de température (17) pour mesurer la température (2) dans le cylindre ou dans le secteur de gaz d'échappement (37) placé en aval et au moins un dispositif (5) pour la détection de la puissance réelle (1).

7. Moteur à combustion interne selon la revendication 6, **caractérisé en ce qu'**il s'agit d'un moteur à allumage par étincelle, à mélange comprimé, de préférence stationnaire.
